# EUROPÄISCHE PATENTSCHRIFT

(11) **EP 0 657 264 B1**
(45) Veröffentlichungstag und Bekanntmachung des Hinweises auf die Patenterteilung: **21.07.1999**
(21) Anmeldenummer: 94810690.1
(22) Anmeldetag: 05.12.1994
(51) Int. Cl.: B29C 37/00, B29C 59/00, B29D 11/00

(54) **Verfahren und Vorrichtung zur Herstellung einer Kontaktlinse**
Process and device for the production of a contact lens
Procédé et dispositif pour la production d'une lentille de contact

(30) Priorität: 13.12.1993 EP 93810872
(43) Veröffentlichungstag der Anmeldung: 14.06.1995
(73) Patentinhaber: Novartis AG, 4058 Basel (CH); Novartis-Erfindungen Verwaltungsgesellschaft m.b.H., 1235 Wien (AT)
(72) Erfinder: Boneberger, Karlheinz, D-63906 Erlenbach (DE); Haase, Lothar, D-51597 Morsbach/Sieg (DE); Schäfer, Horst, Dr., D-63743 Aschaffenburg (DE); Steffan, Werner, D-63928 Eichenbühl (DE); Zang, Peter, D-63762 Grossostheim (DE)

(56) Entgegenhaltungen:
- EP-A- 0 472 303
- EP-A- 0 588 660
- DE-B- 1 052 290
- FR-A- 1 497 746
- US-A- 4 257 755

## Beschreibung

Die Erfindung betrifft ein Verfahren und eine Vorrichtung gemäss dem Oberbegriff des jeweiligen Patentanspruchs.

Bei der Herstellung von Kontaktlinsen im sogenannten Full-mold-Verfahren (Giessverfahren) werden Kontaktlinsen üblicherweise so hergestellt, dass in die Mutterformhälfte eine bestimmte Menge eines polymerisierbaren Kontaktlinsenmaterials dispensiert wird. Anschliessend wird die Form durch Aufsetzen der Vaterformhälfte geschlossen, wobei zwischen den beiden formgebenden Flächen eine Formkavität eingeschlossen wird. In dieser Formkavität befindet sich das zuvor dispensierte Kontaktlinsenmaterial, welches zu einer noch unhydratisierten Kontaktlinse polymerisiert wird. Anschliessend wird die Form geöffnet und die polymerisierte, aber noch unhydratisierte Kontaktlinse entnommen und weiterbearbeitet.

Leider lässt sich im Regelfall nicht zuverlässig vorhersagen, an welcher der beiden Formhälften die Kontaktlinse haftet, in einigen Fällen haftet sie an der Vaterformhälfte (Formhälfte mit der konvexen formgebenden Fläche), in anderen Fällen bleibt sie in der Mutterformhälfte (Formhälfte mit der konkaven formgebenden Fläche) zurück. Beide Fälle treten aber nicht mit einer so grossen Häufigkeit auf, dass ein im wesentlichen vollautomatischer Prozess auf einen dieser beiden Fälle zugeschnitten werden könnte.

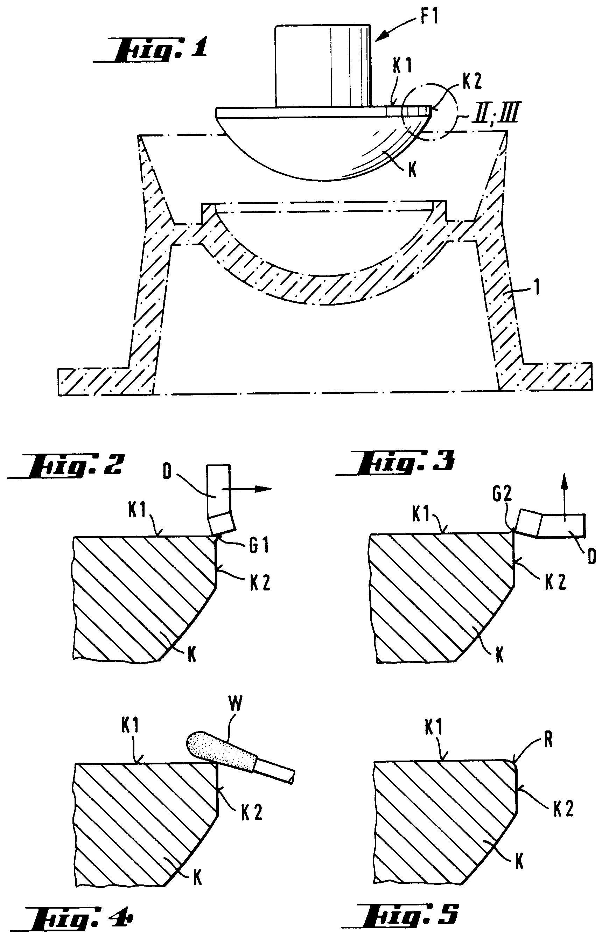

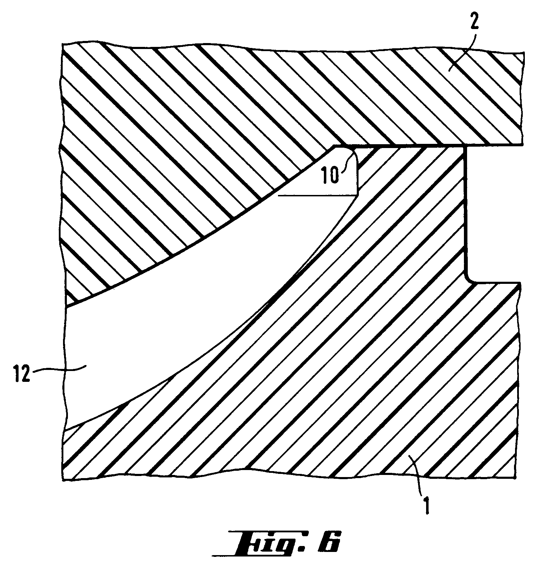

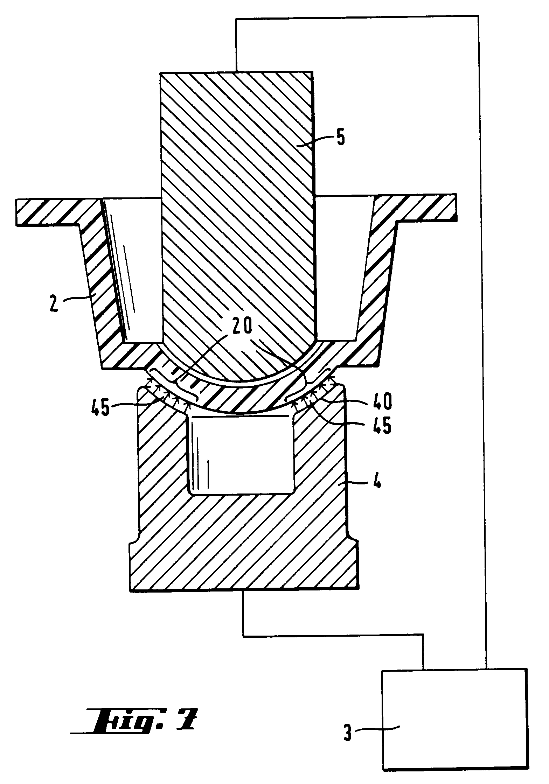

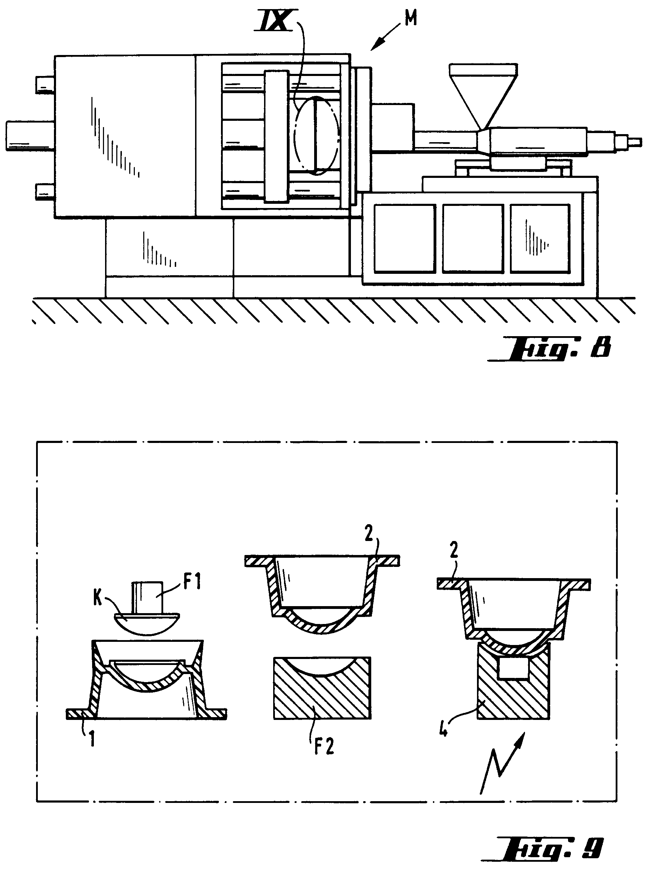

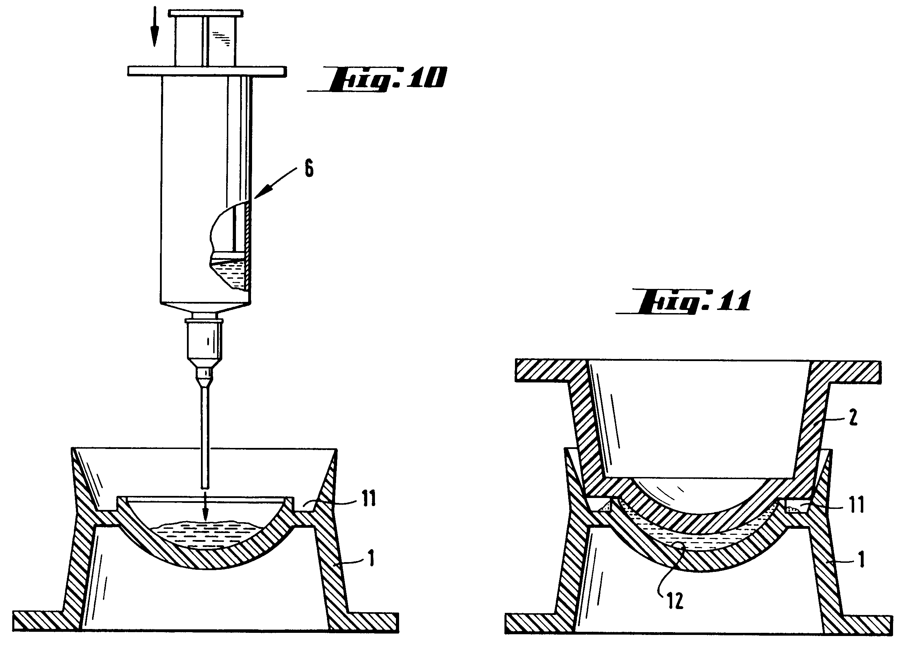

Die Ursachen liegen unter anderem in der Herstellung der Formhälften begründet. Solche Formhälften werden üblicherweise im Spritzgussverfahren hergestellt. Am Beispiel der Herstellung der Mutterformhälfte 1 sollen die dabei auftretenden Probleme kurz erläutert werden. Beim Spritzgiessen werden üblicherweise Formeinsätze verwendet, wie sie in Fig. 1 zu erkennen sind. Solche Formeinsätze F1 gehören zum Stand der Technik. Das hier gezeigte Beispiel weist die Gestalt eines Pilzes auf. Sie werden beispielsweise mittels der Drehtechnik hergestellt. Beim Drehen des Kopfes K des Pilzes wird zunächst die Fläche K1 gedreht (Fig. 2), anschliessend die Fläche K2 (Fig. 3). Dabei entsteht - durch das Drehen mit dem Drehdiamanten D bedingt - jeweils ein Grad G1 bzw. G2 (Fig.2, Fig.3), der nach Beendigung des Drehvorgangs entfernt werden muss. Das Entfernen des Grats G1 bzw. G2 erfolgt beispielsweise mittels eines Wattestäbchens W(Fig. 4). Dadurch entsteht an der Stelle, an der der Grat entfernt worden ist, eine kleine Rundung R, deren Abweichng von der idealen, gratfreien Ecke abweicht, wobei die Abweichung von der Idealform im Bereich einiger Mikrometer liegt (Fig. 5).

Setzt man nun diesen Formeinsatz F1 ein und spritzt um diesen Formeinsatz herum die Mutterformhälfte 1, so entsteht hier ein wenn auch sehr kleiner Vorsprung 10 (Fig. 6). Dieser Vorsprung kann je nach Grösse jedoch beim Öffnen der Formhälften bewirken, dass die Linse in der Mutterformhälfte zurückbleibt, weil sie an dem Vorsprung 10 hängenbleibt, oder sie kann über den Vorsprung gleiten, so dass sie sich auf der Vaterformhälfte befindet. Eine äusserst zuverlässige Aussage hierüber lässt sich kaum machen, schon gar nicht von einer Zuverlässigkeit, wie sie für einen automatisierten Prozess notwendig ist. Daher muss nach dem Öffnen der Form in jedem Fall eine Prüfung erfolgen, an bzw. in welcher Formhälfte sich die polymerisierte, jedoch noch unhydratisierte Kontaktlinse befindet.

Im Stand der Technik sind Verfahren bekannt, die zuverlässig gestatten, dass die Kontaktlinse an einer der beiden Formhälften haftet. Hierdurch kann eine Prüfung, an bzw. in welcher Formhälfte sich die Kontaktlinse nach dem Öffnen der Form befindet, entfallen.

So ist aus der EP-A-0 472 303 gemäß Oberbegriff des Anspruchs 1 bekannt, die formgebende Fläche von einer der beiden Formhälften vor ihrer Verwendung mittels Coronabehandlung vorzubehandeln, um eine bevorzugte Haftung der Kontaktlinse an die vorbehandelte Fläche zu erhalten. Allerdings wird die gesamte Fläche der Formhälfte behandelt, so dass es zu Wechselwirkungen zwischen dem eingefüllten Kontaktlinsenmaterial und der vorbehandelten Fläche kommen kann, die sich auf die optischen Eigenschaften der Kontaktlinse negativ auswirken.

Aufgabe der Erfindung ist somit, ein Verfahren und eine Vorrichtung zu schaffen, die eine zuverlässige Haftung der Kontaktlinse an einer der beiden Formhälften ermöglichen, dabei aber den optisch wirksamen Bereich der Kontaktlinse von solchen Massnahmen unbeeinflusst zu lassen, um eine Veränderung der optischen Korrekturwirkung der Kontaktlinse oder andere negative Nebenwirkungen auszuschliessen.

Verfahrensmässig wird diese Aufgabe dadurch gelöst, dass zur Vorbehandlung der einen Formhälfte eine Coronabehandlungseinrichtung verwendet wird, welche zwei Elektroden aufweist, die in einem Abstand voneinander angeordnet sind und zwischen denen bei der Vorbehandlung die betreffende Formhälfte angeordnet ist, wobei die der formgebenden Fläche der zu behandelnden Formhälfte zugewandte Elektrode eine ringförmige Fläche aufweist, die sich im wesentlichen über den zu behandelnden Bereich der Formhälfte erstreckt. Dadurch wird der Bereich ausserhalb des optisch wirksamen Bereichs so vorbehandelt, dass eine sichere Haftung der Kontaktlinse in dem vorbehandelten Bereich gewährleistet ist. Zum anderen haftet die Kontaktlinse nur in einem Bereich ausserhalb ihres optisch wirksamen Bereichs an der vorbehandelten Formhälfte, wodurch die optische Wirkung der Kontaktlinse in jedem Fall voll erhalten bleibt.

Vorzugsweise wird die Vaterformhälfte vorbehandelt, da dann die weitere Bearbeitung der Kontaktlinse sich besonders einfach gestaltet. Die an der Vaterformhälfte haftende Kontaktlinse kann beim Öffnen der Form zuverlässig über den eingangs beschriebenen Vorsprung 10 (Fig. 6) der Mutterformhälfte gleiten, so dass der weitere Bearbeitungsprozess mithin auf die Vaterformhälfte mit der an ihr haftenden Kontaktlinse zugeschnitten werden kann.

In einer weiteren Verfahrensvariante wird die an der Fornhälfte haftende hydratisierte Kontaktlinse in einem zusätzlichen Verfahrensschritt bei noch geschlossener Form getempert, anschliessend die Form geöffnet und dann die Formhälfte, an der die noch unhydratisierte Kontaklinse haftet, einer Hydratationsstation zugeführt, wo die unhydratisierte Kontaktlinse von der Fom abgelöst und hydratisiert wird. Durch das Tempern der Kontaklinse werden eventuell vorhandene Materialspannungen abgebaut und die Polymerisation endgültig abgeschlossen. Beim Hydratisieren wird die Linse von der Formhälfte abgelöst und gequollen.

Im Fall, dass die Kontaklinse an der Vaterformhälfte haftet, wird in einer weiteren Verfahrensvariante die an der Vaterformhälfte haftende, noch unhydratisierte Kontaktlinse nach dem Öffnen der Form im Irisbereich gefärbt. Zur Färbung der noch unhydratisierten Kontaktlinse wird vorzugsweise das Tamponverfahren verwendet, welches sich bei der Färbung von Kontaktlinsen bereits bewährt hat.

Vorrichtungsmässig wird die Aufgabe der Erfindung dadurch gelöst, dass zur Vorbehandlung der einen Formhälfte eine Coronabehandlungseinrichtung vorgesehen ist, welche zwei Elektroden aufweist, die in einem Abstand voneinander angeordnet sind und zwischen denen bei der Vorbehandlung die betreffende Formhälfte angeordnet ist, wobei die der formgebenden Fläche der zu behandelnden Formhälfte zugewandte Elektrode eine ringförmige Fläche aufweist, die sich im wesentlichen über den zu behandelnden Bereich der Formhälfte erstreckt. Dadurch wird der Bereich ausserhalb des optisch wirksamen Bereichs so vorbehandelt, dass eine sichere Haftung der Kontaktlinse in dem vorbehandelten Bereich gewährleistet ist. Zum anderen haftet die Kontaktlinse nur in einem Bereich ausserhalb ihres optisch wirksamen Bereichs an der vorbehandelten Formhälfte, wodurch die optische Wirkung der Kontaktlinse in jedem Fall voll erhalten bleibt. Ausserdem ist der konstruktive Aufwand für eine solche Vorrichtung gering.

Vorzugsweise ist die zu behandelnde Formhälfte die Vaterformhälfte ist, und die der formgebenden Fläche zugewandte ringförmige Fläche der Elektrode ist konkav ausgebildet ist. Diese Ausbildung der Elektroden gewährleistet eine gleichmässige Haftung der Kontaktlinse an der Vaterformhälfte im Bereich ausserhalb des optisch wirksamen Bereichs, die optische Wirkung der Kontaktlinse bleibt somit unbeeinträchtigt.

In einem weiteren Ausführungsbeispiel der Vorrichtung weist diese einen Temperofen für die noch geschlossene Form mit der an der einen Formhälfte haftenden unhydratisierte Kontaktlinse auf, sowie eine Hydratationseinrichtung zum Ablösen und Hydratisieren der noch unhydratisierten Kontaktlinse. Durch das Tempern der Kontaktlinse werden eventuell vorhandene Materialspannungen abgebaut und die Polymerisation endgültig abgeschlossen. Beim Hydratisieren wird die Linse von der Formhälfte abgelöst und gequollen.

Weiterhin kann die Vorrichtung eine Einrichtung zum Färben umfassen, welche die an der Vaterformhälfte haftende noch unhydratisierte Kontaktlinse im Irisbereich einfärbt. Dadurch lassen sich Kontaktlinsen herstellen, die einen gewünschten Farbeindruck der Iris erzeugen. Zu diesem Zweck ist besonders eine Vorrichtung geeignet, die einen Färbetampon umfasst, welcher zum Färben des Irisbereichs auf diesen Bereich der Kontaktlinse aufdrückbar ist.

Im folgenden wird der Stand der Technik und die Erfindung anhand der Zeichnung näher erläutert. Es zeigen, teilweise in schematischer Darstellung und/oder im Schnitt:
- Fig. 1: einen Formeinsatz für eine Spritzgussform zur Herstellung der Mutterformhälfte gemäss Stand der Technik,
- Fig. 2: das Detail II der Fig. 1 zur Erläuterung der Herstellung einer Fläche des Formeinsatzes,
- Fig. 3: das Detail III der Fig. 1 zur Erläuterung der Herstellung einer weiteren Fläche des Formeinsatzes
- Fig. 4: das Entfernen des bei der Herstellung des Formeinsatzes auftretenden Grats,
- Fig. 5: die Rundung des Formeinsatzes an der Stelle, an der der Grat entfernt worden ist,
- Fig. 6: ein Detail der Mutterformhälfte an der Stelle, an der der Formeinsatz die Rundung aufweist,
- Fig. 7: einen Ausschnitt eines Ausführungsbeispiel einer erfindungsgemässen Vorrichtung zur Vorbehandlung der Vaterformhälfte,
- Fig. 8: eine Spritzgiessvorrichtung zur Herstellung von Giessformen, welche eine erfindungsgemässe Vorrichtung umfasst,
und
- Fig. 9 bis Fig. 16: eine Verfahrensvariante des erfindungsgemässen Verfahrens mit den einzelnen Verfahrensschritten.

Die Figuren 1-6 dienen lediglich der besseren Illustration der Probleme, die sich bei der Herstellung von Kontaktlinsen im Fullmold-Verfahren ergeben und die von der Herstellungstechnik der Formen herrühren. Diese Probleme sind eingangs bereits erläutert worden. Beim Drehen der Flächen K1 und K2 entsteht ein jeweils ein Grat G1 bzw. G2, der anschliessend z.B. mit einem Wattestäbchen W entfenrt wird. Dadurch entsteht die Rundung R, welche bei der Herstellung der Mutterformhälfte 1 dazu führt, dass der Vorsprung 10 entsteht. Dies kann, wie eingangs bereits erläutert, dazu führen, dass die Kontaktlinse beim Öffnen der Form entweder an der Vaterformhälfte haftet oder durch den Vorsprung 10 in der Mutterformhälfte zurückbleibt, eine hinreichend zuverlässige Aussage hierüber lässt sich nicht machen.

Mit Hilfe des in Fig. 7 gezeigten Ausschnitts eines Ausführungsbeispiels der erfindungsgemässen Vorrichtung wird dieses Problem behoben und zusätzlich gewährleistet, dass der optisch wirksame Bereich der Kontaktlinse unbeeinträchtigt bleibt. In Fig. 7 erkennt man einen Generator 3, der an eine Elektrode 4 angeschlossen ist und der diese Elektrode 4 mit Hochspannung versorgt. Ferner erkennt man eine Gegenelektrode 5, die in einem Abstand von der Elektrode angeordnet ist, die mit dem Generator 3 verbunden ist. Im Zwischenraum 45 zwischen den Elektroden 4 und 5 ist die vorzubehandelnde Formhälfte, hier eine Vaterformhälfte 2, angeordnet. Die Elektrode 4 weist eine ringförmige Fläche 40 auf, die sich im wesentlichen über den zu behandelnden Bereich 20 der Vaterformhälfte 2 erstreckt und konkav ausgebildet ist. Auf der anderen Seite der Vaterformhälfte 2 befindet sich die konvex augebildete Gegenelektrode 5.

Beim Betrieb wird der Bereich 20 der formgebenden Fläche der Vaterformhälfte 2 mit Elektronen bzw. Ionen beschossen, die aus der Elektrode 4 austreten und den Bereich 20 der Vaterformhälte 2 beaufschlagen und in diesem Bereich Ladungsveränderungen erzeugen. Dadurch werden auf der Oberfläche von unpolaren Werkstoffen, wie z.B. auf der formgebenden Fläche von Polypropylenformen, polare Gruppen erzeugt, welche die Haftung der später gebildeten Kontaktlinse an dieser Oberfläche gewährleisten. Als Material für die Formen kommt beispielsweise auch Polystyrol, PMMA (Polymethylmethacrylat) oder Polycarbonat in Frage. Da nur der optisch nicht wirksame Bereich 20 beschossen wird, haftet die später gebildete Kontaktlinse auch nur in diesem Bereich 20 an der Vaterformhälfte 2.

Zur Vorbehandlung der Vaterformhälfte 2 können handelsübliche Koronabehandlungsgeräte eingesetzt werden, beispielsweise das Gerät mit der Typenbezeichnung HS 020/600 der Firma Arcotec. Dabei kann beispielsweise die Beschusszeit etwa eine Sekunde betragen, die Frequenz kann im Bereich von etwa 20 kHz bis 40 kHz liegen, und die Spannung zwischen den Elektroden etwa 10 kV bis 20 kV betragen. Diese Werte sind aber nur beispielhaft zu betrachten, es sind auch andere Parameter möglich. Die Elektrode 4, die mit dem Generator 3 verbunden ist, ist vorteilhafterweise zumindest auf der ringförmigen Fläche 40, die dem Bereich 20 der Vaterformhälfte 2 zugewandt ist, aus Wolfram. Dies ist insofern vorteilhaft, falls es einmal zu geringsten Ablagerungen auf der später mit Hilfe dieser Formhälfte gefertigten Kontaktlinse zu Ablagerungen kommen sollte. Dann wird durch die Wahl von Wolfram eine Reaktion des Auges vermieden.

In Fig. 8 ist eine Spritzgiessmaschine M dargestellt, mit welcher die Formhälften (Molds) hergestellt werden. Das "Herzstück" der Maschine ist in Fig. 9 schematisch dargestellt, da es den ersten Verfahrensschritt bei der Herstellung von Kontaktlinsen verdeutlicht. Dort werden nämlich die beiden Formhälften, die Mutterformhälfte 1 und die Vaterformhälfte 2, mit Hilfe der entsprechenden Formeinsätze F1 bzw. F2 hergestellt. Die Vaterformhälfte wird anschliessend der Koronabehandlung ausgesetzt, wobei nur der Bereich 20 ausserhalb des optisch wirksamen Bereichs der später mit Hilfe dieser Formhälfte gefertigten Kontaktlinse vorbehandelt wird.

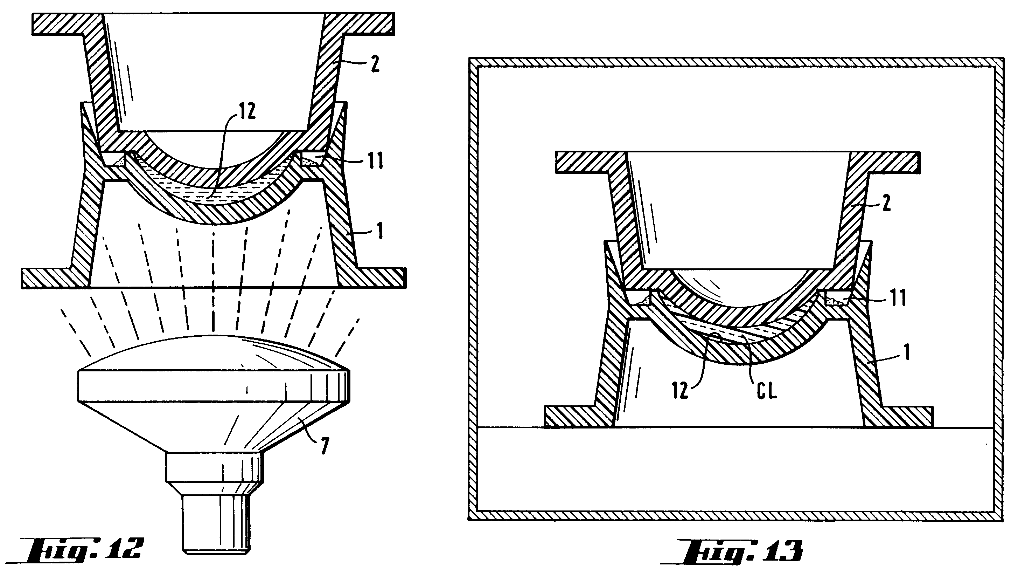

Anschliessend wird, wie in Fig. 10 angedeutet, mittels einer Dispensiereinrichtung 6 eine bestimmte Menge eines polymerisierbaren Materials in die Mutterformhälfte 1 dispensiert und anschliessend die Vaterformhälfte 2 aufgesetzt und die Form geschlossen (Fig. 11). Die zwischen den formgebenden Flächen der beiden Formhälften 1 und 2 gebildete Formkavität 12 definiert die Gestalt der später gebildeten Kontaktlinsen. Eventuell überschüssiges unpolymerisiertes Kontaktlinsenmaterial wird beim Schliessen der Form in einen Überlauf 11 gedrückt, der an der Mutterformhälfte 1 vorgesehen ist.

Anschliessend wird die geschlossene Form mitsamt dem in der Form eingeschlossenen unpolymerisierten Kontaktlinsenmaterial zumindest im Bereich der Formkavität 12 mit Licht aus einer Lichtquelle 7 beaufschlagt (Fig. 12). Dazu muss natürlich die Mutterformhälfte 1 aus einem für dieses Licht transparenten Material bestehen. Somit wird zumindest das in der Formkavität 12 befindliche Kontaktlinsenmaterial zu einer noch unhydratisierten Kontaktlinse CL polymerisiert. Es ist aber nicht notwendig, dass nur das in der Formkavität 12 befindliche Kontaktlinsenmaterial polymerisiert wird, es kann auch eventuell im Überlauf 11 befindliches Kontaktlinsenmaterial polymerisiert werden. Dies ist insofern vorteilhaft, als beim Öffnen der Form dann das überschüssige polymerisierte Kontaktlinsenmaterial im Überlauf 11 der Mutterformhälfte 1 verbleibt, während die an der Vaterformhälfte 2 haftende Kontaktlinse CL mitsamt der Vaterformhälfte 2 entfernt und weiterbearbeitet werden kann.

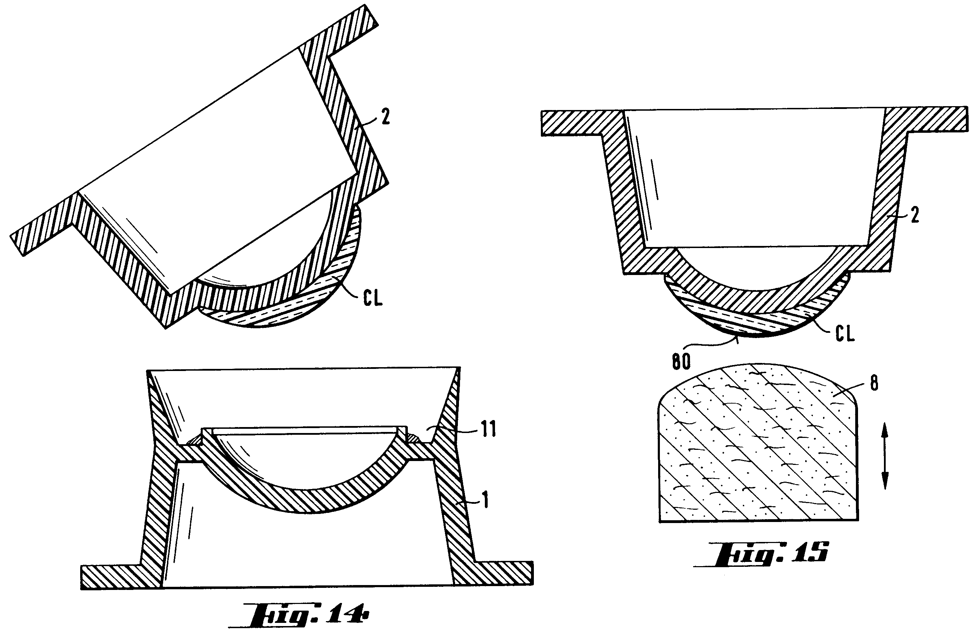

Vor dem Öffnen wird die noch geschlossene Form mitsamt der in ihr befindlichen Kontaktlinse CL in einen Temperofen zum Tempern eingebracht und bei einer Temperatur von etwa 120° C eine Zeit lang getempert, wodurch eventuell vorhandene Materialspannungen abgebaut werden und die Polymerisation endgültig abgeschlossen wird (Fig. 13).

Anschliessend wird die Form geöffnet, wobei die noch unhydratisierte Kontaktlinse CL an der Vaterformhälfte 2 haftet, überschüssiges Kontaktlinsenmaterial (in Fig. 14 dargestellt) hingegen im Überlauf 11 der Mutterformhälfte 1 verbleibt.

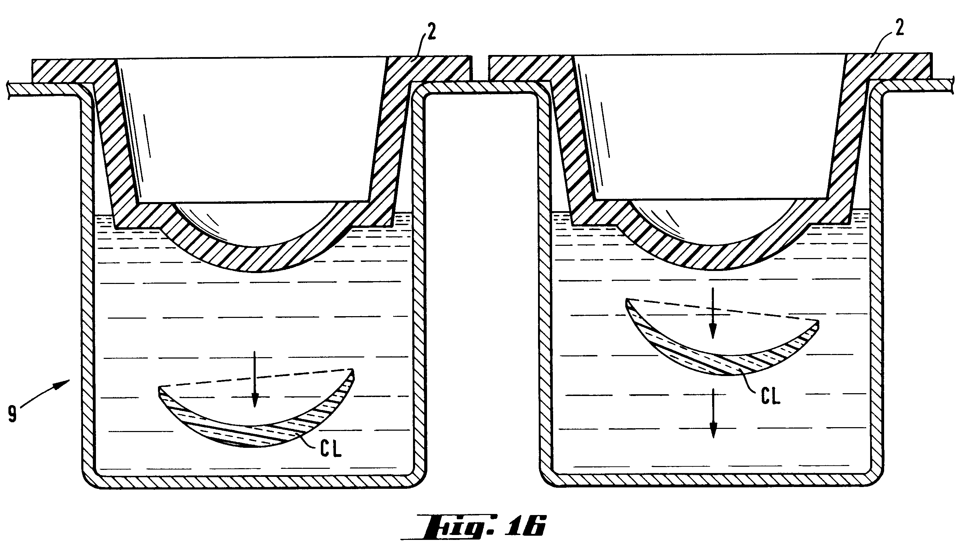

Die noch unhydratisierte Kontaktlinse kann dann, dies ist aber nur fakultativ, z.B. mittels eines Tampons 8 (Fig. 15), der mit einem Farbstoff 80 versehen ist, im Irisbereich der Linse gefärbt werden, um einen gewünschten Farbeindruck zu erzielen. Zu diesem Zweck wird der Tampon 8 über eine definierte Zeitspanne auf die Kontaktlinse CL aufgedrückt.

Die an der Vaterformhälfte 2 haftende Kontaktlinse CL wird dann einer Hydratationseinrichtung 9 zugeführt, wo die Kontaktlinse CL von der Vaterformhälfte abgelöst und hydratisiert wird (Fig. 16). Diese Hydratationseinrichtung 9 kann als Magazin ausgebildet sein, damit mehrere Kontaktlinsen gleichzeitig abgelöst und hydratisiert werden können. Dies gilt entsprechend auch für die übrigen, weiter oben beschriebenen Einrichtungen.

Es ist ohne weiteres für den Fachmann verständlich, dass anstelle der Vaterformhälfte 2 auch die Mutterformhälfte 1 vorbehandelt werden kann, was zur Folge hat, dass die Kontaktlinse anschliessend an der Mutterformhälfte 1 haftet und die Mutterformhälfte 1 mit der darin befindlichen Kontaktlinse dann weiterbearbeitet werden muss.

## Patentansprüche

1. Verfahren zur Herstellung von Kontaktlinsen, bei welchem Verfahren ein polymerisierbares Kontaktlinsenmaterial in eine Formhälfte (1) dispensiert wird, anschliessend die Form mittels der zweiten Formhälfte (2) geschlossen wird, und dann das zwischen den beiden Formhälften in der Formkavität (12) befindliche Material polymerisiert und so eine noch unhydratisierte Kontaktlinse (CL) geformt wird, wobei die formgebende Fläche von einer der beiden Formhälften (1,2) vor ihrer Verwendung mittels Coronaentladung so vorbehandelt wird, dass beim Oeffnen der Form die Kontaktlinse (CL) an der vorbehandelten Formhälfte (1,2) haftet, **dadurch gekennzeichnet,** dass die formgebende Fläche von einer der beiden Formhälften (1,2) nur ausserhalb der optisch wirksamen Zone der Kontaktlinse (CL) vorbehandelt wird, wobei eine Coronabehandlungseinrichtung verwendet wird, die zwei Elektroden (4,5) aufweist, die in einem Abstand voneinander angeordnet sind, und zwischen denen bei der Vorbehandlung die betreffende Formhälfte (1,2) angeordnet ist, wobei zumindest die der formgebenden Fläche der zu behandelnden Formhälfte (1,2) zugewandte Elektrode (4) eine ringförmige Fläche (40) aufweist, die sich im wesentlichen über den zu behandelnden Bereich (20) der Formhälfte (1,2) erstreckt.

2. Verfahren nach Anspruch 1, dadurch gekennzeichnet, dass die Vaterformhälfte (2) vorbehandelt wird.

3. Verfahren nach Anspruch 1 oder 2, dadurch gekennzeichnet, dass die an der Formhälfte (2) haftende unhydratisierte Kontaktlinse (CL) in einem weiteren Verfahrensschritt bei noch geschlossener Form getempert wird, anschliessend die Form geöffnet und dann die Formhälfte (2), an der die noch unhydratisierte Kontaktlinse (CL) haftet, einer Hydratationsstation (9) zugeführt wird, wo die unhydratisierte Kontaktlinse (CL) von der Formhälfte (2) abgelöst und hydratisiert wird.

4. Verfahren nach Anspruch 2 oder 3, dadurch gekennzeichnet, dass die an der Vaterformhälfte (2) haftende noch unhydratisierte Kontaktlinse (CL) nach dem Oeffen der Form im Irisbereich gefärbt wird.

5. Verfahren nach Anspruch 4, dadurch gekennzeichnet, dass zur Färbung der noch unhydratisierten Kontaktlinse (CL) das Tampondruckverfahren verwendet wird.

6. Vorrichtung zur Herstellung von Kontaktlinsen, mit einer zwei Formhälften (1,2) umfassenden Form, wobei die Formhälften (1,2) jeweils eine formgebende Fläche aufweisen und in geschlossenem Zustand der Form eine Formkavität (12) einschliessen, die die Gestalt der Kontaktlinse (CL) definiert, mit einer Dispensiereinrichtung (6) zum Zuführen eines polymerisierbaren Kontaktlinsenmaterials in die eine Formhälfte (1), mit einer Lichtquelle (7) zur Beaufschlagung des nach dem Schliessen der Form in die Formkavität (12) eingeschlossenen Kontaktlinsenmaterials mit Licht, wodurch das in die Formkavität (12) eingeschlossene Material polymerisiert wird und eine noch unhydratisierte Kontaktlinse (CL) erzeugt wird, und mit einer Coronabehandlungseinrichtung zur Vorbehandlung der formgebenden Fläche von einer der beiden Formhälften (1,2) vor ihrer Verwendung, wobei die formgebende Fläche einer der beiden Formhälften (1,2) so vorbehandelt wird, dass beim Oeffnen der Form die Kontaktlinse an der vorbehandelten Formhälfte haftet, **dadurch gekennzeichnet,** dass die Coronabehandlungseinrichtung zwei Elektroden (4,5) aufweist, die in einem Abstand voneinander angeordnet sind und zwischen denen bei der Vorbehandlung die betreffende Formhälfte (1,2) angeordnet ist, wobei zumindest die der formgebenden Fläche der zu behandelnden Formhälfte (1,2) zugewandte Elektrode (4) eine ringförmige Fläche (40) aufweist, die sich im wesentlichen über den zu behandelnden Bereich (20) der Formhälfte (1,2) erstreckt.

7. Vorrichtung nach Anspruch 7, dadurch gekennzeichnet, dass die zu behandelnde Formhälfte die Vaterformhälfte (2) ist, und dass die der formgebenden Fläche zugewandte ringförmige Fläche (40) der Elektrode (4) konkav ausgebildet ist.

8. Vorrichtung nach Anspruch 6 oder 7, dadurch gekennzeichnet, dass sie einen Temperofen für die noch geschlossenen Form mit der an der einen Formhälfte (2) haftenden unhydratisierten Kontaktlinse (CL) umfasst, sowie eine Hydrationseinrichtung (9) zum Ablösen und Hydratisieren der noch unhydratisierten Kontaktlinse (CL).

9. Vorrichtung nach einem oder mehreren der Ansprüche 6 bis 8, dadurch gekennzeichnet, dass eine Einrichtung zum Färben vorgesehen ist, welche die an der Vaterformhälfte (2) haftende noch unhydratisierte Kontaktlinse (CL) im Irisbereich einfärbt.

10. Vorrichtung nach Anspruch 9, dadurch gekennzeichet, dass die Einrichtung zum Färben einen Färbetampon (8) umfasst, welcher zum Färben des Irisbereiches auf diesen Bereich der Kontaktlinse (CL) aufdrückbar ist.

## Claims

1. A process for the manufacture of contact lenses, in which process a polymerisable contact lens material is dispensed into one mould half (1), the mould is subsequently closed by means of the second mould half (2) and then the material located between the two mould halves in the moulding cavity (12) is polymerised, thus forming an as yet unhydrated contact lens (CL), the moulding surface of one of the two mould halves (1, 2) being pre-treated by means of corona discharge, before use, in such a manner that, when the mould is opened, the contact lens (CL) adheres to the pre-treated mould half (1, 2), **wherein** the moulding surface of one of the two mould halves (1, 2) is pre-treated only outside the optically active zone of the contact lens (CL), using a corona-treatment device comprising two electrodes (4, 5) which are arranged at a distance from each other and between which the mould half (1, 2) in question is arranged during the pre-treatment, at least the electrode (4) facing the moulding surface of the mould half (1, 2) to be treated having an annular face (40) which extends substantially over the region (20) that is to be treated of the mould half (1, 2).

2. A process according to claim 1, which comprises pre-treating the male mould half (2).

3. A process according to claim 1 or claim 2, wherein the unhydrated contact lens (CL) adhering to the mould half (2) is tempered in an additional process step while the mould is still closed, the mould is subsequently opened and then the mould half (2) to which the as yet unhydrated contact lens (CL) is adhering is passed to a hydration station (9) where the unhydrated contact lens (CL) is detached from the mould half (2) and hydrated.

4. A process according to claim 2 or claim 3, wherein the as yet unhydrated contact lens (CL) adhering to the male mould half (2) is dyed in the iris region after opening of the mould.

5. A process according to claim 4, wherein the tampon printing method is used to dye the as yet unhydrated contact lens (CL).

6. An apparatus for the manufacture of contact lenses, having a mould which comprises two mould halves (1, 2), the mould halves (1, 2) having a moulding surface each and enclosing in the closed state of the mould a moulding cavity (12) which defines the shape of the contact lens (CL), having a dispensing device (6) for feeding a polymerisable contact lens material into the one mould half (1), having a light source (7) for exposing the contact lens material, enclosed in the moulding cavity (12) after closing of the mould, to light, whereby the material enclosed in the moulding cavity (12) is polymerised and an as yet unhydrated contact lens (CL) is produced, and having a corona treatment device for pre-treating the moulding surface of one of the two mould halves (1, 2) before use thereof, the moulding surface of one of the two mould halves (1, 2) being pre-treated in such a manner that, when the mould is opened, the contact lens adheres to the pre-treated mould half, **wherein** the corona-treatment device comprises two electrodes (4, 5) which are arranged at a distance from each other and between which the mould half (1, 2) in question is arranged during the pre-treatment, at least the electrode (4) facing the moulding surface of the mould half (1, 2) to be treated having an annular face (40) which extends substantially over the region (20) that is to be treated of the mould half (1, 2).

7. An apparatus according to claim 7, wherein the mould half to be treated is the male mould half (2), and the annular face (40) of the electrode (4) facing the moulding surface is concave.

8. An apparatus according to claim 6 or claim 7, which comprises a tempering oven for the still closed mould with the unhydrated contact lens (CL) adhering to the one mould half (2), and a hydration device (9) for detaching and hydrating the as yet unhydrated contact lens (CL).

9. An apparatus according to one or more of claims 6 to 8, wherein a device for dyeing is provided which dyes the as yet unhydrated contact lens (CL), adhering to the male mould half (2), in the iris region.

10. An apparatus according to claim 9, wherein the device for dyeing comprises a dyeing tampon (8) which can be pressed onto the iris region of the contact lens (CL) in order to dye that region.

## Revendications

1. Procédé pour fabriquer des lentilles de contact, procédé selon lequel un matériau polymérisable pour lentilles de contact est répandu dans une moitié de moule (1), le moule est ensuite fermé au moyen de la seconde moitié de moule (2), puis le matériau se trouvant dans la cavité de moulage (12), entre les deux moitiés de moule, est polymérisé et une lentille de contact (CL), non encore hydratée, est ainsi formée, la surface de mise en forme de l'une des deux moitiés de moule (1, 2) étant alors, avant son utilisation, prétraitée au moyen d'une décharge par effet corona, de telle sorte qu'à l'ouverture du moule, la lentille de contact (CL) adhère à la moitié de moule prétraitée (1, 2), caractérisé en ce que la surface de mise en forme de l'une des deux moitiés de moule (1, 2) n'est prétraitée qu'à l'extérieur de la zone optiquement active de la lentille de contact (CL), un dispositif de traitement par effet corona étant alors utilisé, ce dispositif comportant deux électrodes (4, 5) qui sont disposées à une certaine distance l'une de l'autre et entre lesquelles la moitié de moule concernée (1, 2) est disposée lors du prétraitement, au moins l'électrode (4), qui est tournée vers la surface de mise en forme de la moitié de moule à traiter (1, 2), présentant une surface annulaire (40), qui s'étend sensiblement sur la région à traiter (20) de la moitié de moule (1, 2).

2. Procédé selon la revendication 1, caractérisé en ce que la moitié de moule père (2) est prétraitée.

3. Procédé selon la revendication 1 ou 2, caractérisé en ce que la lentille de contact (CL) non hydratée, qui adhère à la moitié de moule (2), est, au cours d'une étape supplémentaire du procédé, soumise à un recuit dans le moule encore fermé, le moule est ensuite ouvert, puis la moitié de moule (2), à laquelle la lentille de contact (CL) non encore hydratée adhère, est amenée à un poste d'hydratation (9), où la lentille de contact (CL) non hydratée est détachée de la moitié de moule (2) et est hydratée.

4. Procédé selon la revendication 2 ou 3, caractérisé en ce que la lentille de contact (CL) non encore hydratée, adhérant à la moitié de moule père (2), est colorée dans la région de l'iris, après l'ouverture du moule.

5. Procédé selon la revendication 4, caractérisé en ce que le procédé d'impression au tampon est utilisé pour la coloration de la lentille de contact (CL) non encore hydratée.

6. Installation pour la fabrication de lentilles de contact, comportant un moule qui comprend deux moitiés de moule (1, 2), les moitiés de moule (1, 2) présentant chacune une surface de mise en forme et délimitant, dans l'état fermé du moule, une cavité de moulage (12) qui définit la forme de la lentille de contact (CL), l'installation comportant encore un dispositif de distribution (6) destiné à introduire un matériau polymérisable pour lentilles de contact dans l'une (1) des moitiés de moule, une source de lumière (7) destinée à soumettre à une exposition lumineuse le matériau pour lentilles de contact enfermé dans la cavité de moulage (12) après la fermeture du moule, grâce à quoi le matériau enfermé dans la cavité de moulage (12) est polymérisé et une lentille de contact (CL), non encore hydratée, est produite, et un dispositif de traitement par effet corona destiné à prétraiter la surface de mise en forme de l'une des deux moitiés de moule (1, 2) avant son utilisation, la surface de mise en forme de l'une des deux moitiés de moule (1, 2) étant alors prétraitée de telle façon qu'à l'ouverture du moule, la lentille de contact adhère à la moitié de moule prétraitée, caractérisée en ce que le dispositif de traitement par effet corona comporte deux électrodes (4, 5), qui sont disposées à une certaine distance l'une de l'autre et entre lesquelles la moitié de moule concernée (1, 2) est disposée lors du prétraitement, au moins l'électrode (4) tournée vers la surface de mise en forme de la moitié de moule à traiter (1, 2) présentant une surface annulaire (40) qui s'étend sensiblement sur la région à traiter (20) de la moitié de moule (1, 2).

7. Installation selon la revendication 6, caractérisée en ce que la moitié de moule à traiter est la moitié de moule père (2) et en ce que la surface annulaire (40), tournée vers la surface de mise en forme, de l'électrode (4) est prévue concave.

8. Installation selon la revendication 6 ou 7, caractérisée en ce qu'elle comprend un four à recuire pour le moule encore fermé avec la lentille de contact (CL), non hydratée, qui adhère à l'une (2) des moitiés de moule, ainsi qu'un dispositif d'hydratation (9) destiné à détacher et hydrater la lentille de contact (CL) non encore hydratée.

9. Installation selon une ou plusieurs des revendications 6 à 8, caractérisée en ce qu'il est prévu un dispositif de coloration, qui colore, dans la région de l'iris, la lentille de contact (CL) non encore hydratée, adhérant à la moitié de moule père (2).

10. Installation selon la revendication 9, caractérisée en ce que le dispositif de coloration comprend un tampon de coloration (8) qui, pour colorer la région de l'iris, peut être pressé sur cette région de la lentille de contact (CL).
